# EUROPÄISCHE PATENTSCHRIFT

(11) **EP 1 691 096 B1**
(45) Veröffentlichungstag und Bekanntmachung des Hinweises auf die Patenterteilung: **31.12.2008**
(21) Anmeldenummer: 05100992.6
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D- 40221 Düsseldorf (DE)
(74) Vertreter: Drömer, Hans-Carsten

(56) Entgegenhaltungen:
- EP-B- 0 563 940
- WO-A-01/51823
- US-A- 1 702 363
- US-A- 4 121 437
- US-A- 5 551 919

## Beschreibung

Die Erfindung betrifft ein Kardangelenk, das zwei Gelenkgabeln aufweist, wobei eine der Gelenkgabeln mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabeln um 90° radial verdreht zueinander angeordnet sind, so daß die beiden Gelenkgabeln einen Innenraum bilden, wobei dem Kardangelenk ein elastisches Kupplungselement zugeordnet ist.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist ein Gelenkkreuz angeordnet, das aus zwei um 90° gegeneinander versetzten Zapfenträgern besteht, wobei das Gelenkkreuz einstückig hergestellt ist, so daß die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, daß diese in axialer Richtung der Lenksäule weich ist. Prinzipbedingt ist die Biegesteifigkeit der Hardyscheibe relativ gering. Dies bewirkt eine Verzerrung der Hardy-Scheibe mit den Biegemomenten aus dem Kardangelenk, falls die Hardy-Scheibe wie üblich in Serie mit dem Kardangelenk angeordnet ist. Da eine Hardy-Scheibe allein (ohne Kardangelenk) zumindest bei entsprechenden Standzeiten nicht geeignet ist, nicht fluchtende Wellen zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardy-Scheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, daß die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale und radiale Freigängigkeit des Gelenks. Außerdem ist der axiale Bauraumbedarf optimierbar.

Nachteilig ist weiterhin, daß das in der EP 0 563 940 B1 offenbarte Kreuzgelenk in seiner Konstruktion sehr aufwendig und damit sehr störanfällig ist. Als Nachteil ist weiter anzusehen, daß die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfaßt:
eine flexible Zentralscheibe, die eine winklige Ausrichtung ermöglicht,
eine Mehrzahl tragender Blattfedern, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,
Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,
Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, daß die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, daß ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselemente auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepaßt werden, in dem die Kupplungselemente gedreht werden, ohne das die Scheibe gebogen wird. Die Scheibe besteht ganz oder teilweise aus Plastik, Gummi oder ähnlichen elastischen Material, so daß dieses während der Verbindung biegefrei ist.

Als ein Hauptnachteil der in der GB 942,495 offenbarten Verbindung für Wellen ist anzusehen, daß die Kupplungselemente mit Spiel zur Scheibe und mit signifikanter Reibung gedreht werden, wobei das Verdrehspiel und die Reibung lediglich geringen Ansprüchen genügt.

Die US 5551919 offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, so daß dieses unter wirtschaftlichen Aspekten günstiger herstellbar ist, ohne daß das elastische Kupplungselement signifikante Biegemomente durchleiten muß.

Diese Aufgabe wird durch die Merkmale des Anspruchs 1 gelöst.

Vorteilhafterweise kann bei dem erfindungsgemäßen Kardangelenk somit auf ein bisher übliches in Serie angeordnetes elastisches Entkoppelungsglied (zusätzliche elastische Kupplung) verzichtet werden. Das elastische Kupplungselement ist vorteilhaft parallel zum Kardangelenk angeordnet. Im Sinne der Erfindung bedeutet eine parallele Anordnung, daß das elastische Kupplungselement dem Kardangelenk direkt zugeordnet ist. Das erfindungsgemäße Kardangelenk weist ein halbes Gelenkkreuz, und zwar lediglich einen einzigen Zapfenträger, sowie das Halteelement zum Aufnehmen des elastischen Kupplungselements auf. Damit ist das Kardangelenk in Einheit mit dem ins Gelenk integrierten elastischen Kupplungselement leichter und kostengünstiger herzustellen. Zudem wird ein Kardangelenk zur Verfügung gestellt, welches hohen Ansprüchen bezüglich des Verdrehspiels und der Lagerreibung genügt.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne daß Einbußen hinsichtlich einer Drehsteifigkeit in Kauf genommen werden müssen. Durch die Integration der Elastizität durch das zweifach drehbar gelagerte elastische Kupplungselement in das das Kardangelenk oder um dieses herum wird vermieden, daß neben einer axialen Nachgiebigkeit auch eine Biegesteifigkeit bereitgestellt werden muß. Mittels des erfindungsgemäßen Kardangelenkes kann die axiale Nachgiebigkeit größer ausgeführt werden, so daß auch Isolationseigenschaften gegenüber herkömmlichen elastischen Kupplungen in Lenksäulenkonstruktionen verbessert sind. Das integrierte elastische Kupplungselement muß keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall eines sonst üblichen Verschiebegelenkes in der Lenksäule, welches Einbautoleranzen und Straßenanregungen kompensieren muß, begünstigen. Weiter erlaubt die erfindungsgemäße Integration des Ringes ein einfaches Zuführen des flexiblen Ringes in axialer Richtung. Zudem erfordert das erfindungsgemäße Kardangelenk ein Minimum an axialem Bauraum.

Weitere vorteilhafte Ausgestaltungen der Erfindung sind in den Unteransprüchen und in der folgenden Figurenbeschreibung offenbart. Es zeigen:
- Fig. 1: Einen Längsschnitt eines Kardangelenks,
- Fig. 2: eine Darstellung entlang des Schnittes A aus Figur 1,
- Fig. 3: eine Darstellung entlang des Schnittes C aus Figur 2,
- Fig. 4: einen Längsschnitt eines Kardangelenks in einer zweiten Ausführung, und
- Fig. 5: eine Darstellung entlang des Schnittes A aus Figur 4.

In den unterschiedlichen Figuren sind gleiche Teile stets mit demselben Bezugszeichen versehen, so daß diese in der Regel auch nur einmal beschrieben werden.

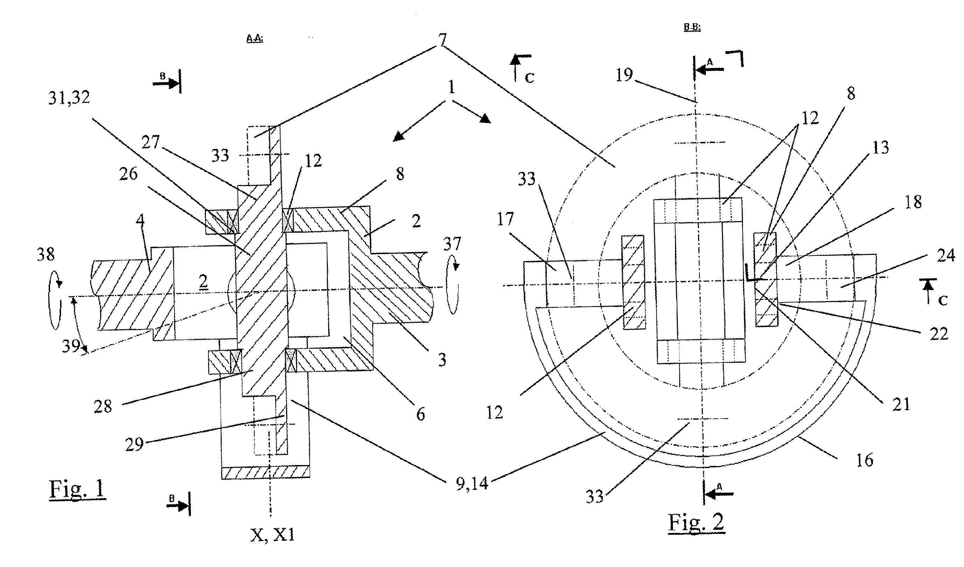

Die Figuren 1 bis 5 zeigen ein Kardangelenk 1, das zwei Gelenkgabeln 2 aufweist. Eine der Gelenkgabeln 2 ist mit einer angetriebenen Welle 3 bzw. Antriebswelle 3 verbunden, wobei die andere Gelenkgabel 2 mit einer anzutreibenden Welle 4 bzw. Abtriebswelle 4 verbunden ist. Die beiden Gelenkgabeln 2 sind um 90° radial verdreht zueinander angeordnet, so daß die beiden Gelenkgabeln 2 einen Innenraum 6 bilden. Dem Kardangelenk 1 ist ein elastisches Kupplungselement 7 zugeordnet. Einer der Gelenkgabeln 2 bzw. deren Gabelschenkeln 8 ist ein Halteelement 9 zugeordnet, wobei der anderen Gelenkgabel 2 bzw. deren Gabelschenkeln 8 ein Zapfenträger 11 zugeordnet ist. Sowohl der Zapfenträger 11 als auch das Halteelement 9 ist in, in den Gelenkgabeln 2 bzw. in deren Gabelschenkeln 8 angeordneten Lagern 12 drehbar gelagert. Der Zapfenträger 11 und das Halteelement 9 sind räumlich voneinander getrennt und über das elastische Kupplungselement 7 miteinander verbunden. Die Anschlüsse von anzutreibenden Welle 4 bzw. Abtriebswelle 4 und angetriebenen Welle 3 bzw. Antriebswelle 3 können natürlich auch vertauscht werden.

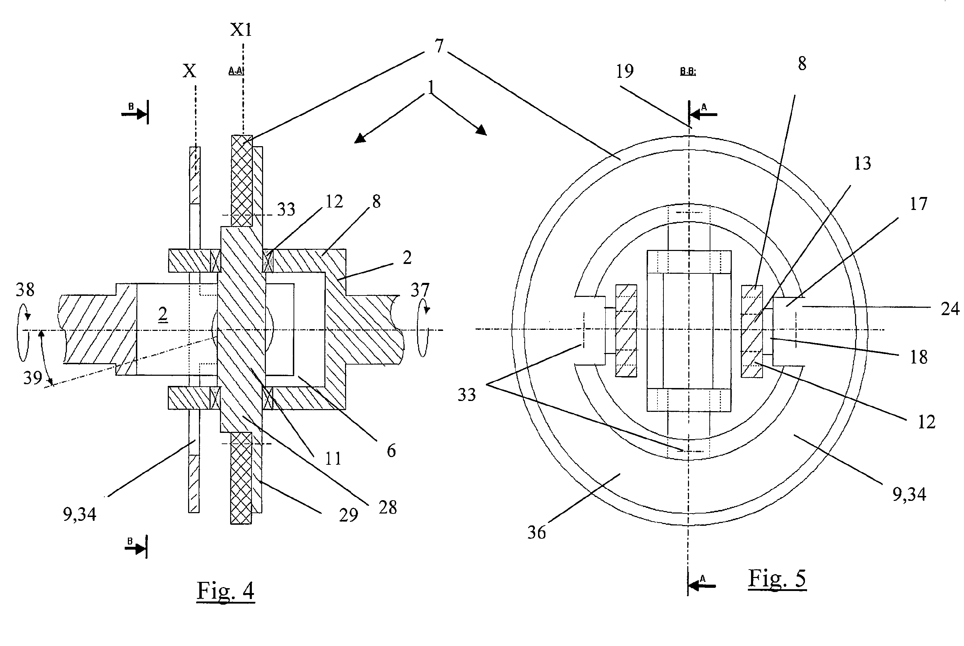

In den dargestellten Ausführungsbeispielen nach den Figuren 1 und 4 ist die jeweilige Welle 3 bzw. 4 einstückig mit den Gelenkgabeln 2 hergestellt. Selbstverständlich können die Gelenkgabeln 2 auch als separate Bauteile mit geeigneten Verbindungsmethoden mit den jeweiligen Wellen 3 bzw. 4 verbunden bzw. an diesen gelagert werden.

Die Lager 12 in den Gabelschenkeln 8 sind als einreihige Lager mit einer radial ausgerichteten Drehachse z. B. als Wälzlager beispielsweise Nadel- oder Kugellager ausgeführt, können aber auch als Gleitlager ausgeführt sein. Zumindest eines der beiden Lager 12 pro Gelenkgabel 2 kann zusätzlich zu den axialen Gelenkkräften noch radiale Gelenkkräfte aufnehmen. Die Lager 12 werden geeignet radial zu einer Gelenkachse in den Gelenkgabeln 2 bzw. deren Gabelschenkeln 12 fixiert. Mögliche Ausführungsformen sind zum Beispiel Preßpassung, Klebung oder Formschluß (Schulteranlage, Springring oder dergleichen) der Lageraußenringe in den Gelenkgabeln 2 bzw. deren Gabelschenkeln 12.

In dem in den Figuren 1, 2 und 3 dargestellten Ausführungsbeispiel ist das Halteelement 9 als Ringklammer 14 ausgestaltet. Die Ringklammer 14 weist einen halbkreisförmigen Basishalbring 16 und jeweils endseitig an diesem angeordnete Befestigungsbereiche 17 auf, die in Zapfenabschnitte 18 übergehen. Die Zapfenabschnitte 18 tragen jeweils einen Zapfen 13.

Die Zapfen 13 greifen bezogen auf eine Gelenkmittelachse 19 jeweils gegensinnig in die zugeordneten Gabelschenkel 8 bzw. in die darin aufgenommenen Lager 12 ein. Die Zapfen 13 sind mit ihrem freien Ende 21 von einer dem Innenraum 6 gegenüberliegenden Außenseite 22 zum Innenraum 6 orientiert. Der Zapfenabschnitt 18 und somit der Zapfen 13 ist bezogen auf die Symmetrieachse 19 außenseitig an den Gelenkgabeln 2 bzw. deren Gabelschenkeln 8 angeordnet, wobei der Zapfenabschnitt 18 an einer zur Außenseite 22 weisenden Seite der Lager 12 anliegt. Die Ringklammer 14 ist in der Seitenansicht gesehen daher etwas größer als die Gelenkgabeln 2, um diese mit ihrem jeweiligen Zapfenabschnitt 18 zu umgreifen, so daß der Zapfen 13 von der Außenseite 22 in die Lager 12 eingreifen kann.

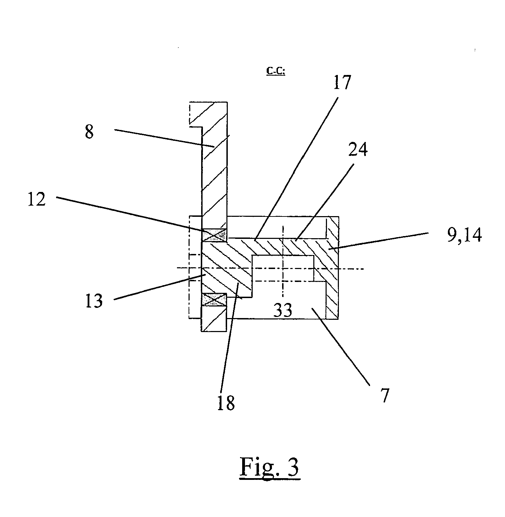

Der jeweilige Befestigungsbereich 17 der Ringklammer 14 ist in Figur 3 im Querschnitt gezeigt. Dieser ist L-förmig mit dem Zapfenabschnitt 18 und einen daran angeordneten Basissteg 24 ausgestaltet.

Der Basissteg 24 erstreckt sich senkrecht von der Gelenkmittelachse 19 weggerichtet radial nach außen. An der zur Außenseite 22 orientierten Seite ist jeweils der Zapfenabschnitt 18 mit seinem Zapfen 11 angeordnet. Das Halteelement 9 ist zum Zapfenträger 11 räumlich beabstandet. Durch den vorhandenen radialen Zwischenraum der Ringklammer 14 zum Zapfenträger 11 wird eine axiale Freigängigkeit des Gelenkes zur Verfügung gestellt. Die Ringklammer 14 kann entweder, wie in den Figuren 1, 2 und 3 dargestellt radial außen herum das elastische Kupplungselement 7 herum geführt werden. Denkbar wäre auch ein innenliegendes Führen der Ringklammer 14 zwischen einem größer konstruierten elastischem Kupplungselement 7 und den Gelenkgabeln 2 bzw. direkt um deren Gabenschenkel 8 herum. Alternativ könnte die Ringklammer 14 auch eine axial versetzte Führung ähnlich wie in den Figuren 4 und 5 dargestellt aufweisen, jedoch im Gegensatz zur Darstellung in den Figuren 4 und 5 mit dem Tragring 34 als Halbring, worauf weiter unten näher eingegangen wird.

Der Zapfenträger 11 ist als rotationssymmetrischer Körper mit einem Grundkörper 26 und jeweils endseitig an dem Grundkörper 26 angeordneten Befestigungsereichen 27 ausgestaltet. In dem dargestellten Ausführungsbeispiel ist der Zapfenträger 11 einstückig hergestellt und mit seinem Grundkörper 26 in dem Innenraum 6 angeordnet.

Die Befestigungsbereiche 27 des Zapfenträgers 11 sind in dem Längsschnitt in Figur 1 dargestellt wie die Befestigungsbereiche 17 des Halteelementes 9 bzw. der Ringklammer 14 L-Förmig mit einem Quersteg 28 und einem daran angeordneten Basissteg 29 ausgeführt.

Der jeweilige Befestigungsbereich 27 ist in der Seitenansicht gesehen etwas schmaler als der Grundkörper 26 ausgeführt, so daß in einem Übergangsbereich 31 Lagerschultern 32 gebildet sind.

Der Zapfenträger 11 durchdringt mit seinem jeweiligen Befestigungsbereich 27 die in der zugeordneten Gelenkgabel 2 bzw. in den Gabelschenkeln 8 angeordneten Lager 12 von dem Innenraum 6 zur Außenseite 22 hin. Die Lagerschultern 32 liegen an einer zum Innenraum 6 orientierten Seite der Lager 12 an.

Das elastische Kupplungselement 7 ist in dem in den Figuren 1, 2 und 3 dargestellten Ausführungsbeispiel als Kreisring - möglich wäre aber auch als vieleckiger oder polygonaler Ring - bevorzugt als torsionssteifer, biege-elastischer bzw. axial elastischer Ring ausgestaltet und mit den Befestigungsbereichen 17 des Halteelementes 9 bzw. der Ringklammer 14 und den Befestigungsbereichen 27 bzw. den Basisstegen 29 des Zapfenträgers 11 verbunden. Das elastische Kupplungselement 7 ist, wie in Figur 2 dargestellt, wie die Ringklammer 14 um die Außenseite 22 der jeweiligen Gelenkgabel 2 bzw. deren Gabelschenkel 12 geführt.

Das elastische Kupplungselement 7 besteht zum Beispiel aus einem Gummi. Als Verbindung mit dem jeweiligen Halteelement 9 bzw. 14 kann beispielsweise eine Schraubverbindung, Nietverbindung, Vulkanisierung oder dergleichen vorgesehen sein. Die Verbindung ist in den Figuren 1 und 2 prinzipiell mittels einer strichpunktierten Linie 33 dargestellt. Das elastische Kupplungselement 7 schließt in radialer Richtung gesehen bündig mit dem Basissteg ab, kann in radialer Richtung gesehen aber auch etwas über den Basissteg 24 überstehen oder in Radialrichtung gesehen etwas kleiner ausgestaltet sein.

Eine weitere Ausgestaltung des erfindungsgemäßen Kardangelenks 1 ist in den Figuren 4 und 5 dargestellt. Wie zu dem in den Figuren 1, 2 und 3 beschriebenem Ausführungsbeispiel greifen die Zapfen 13 bezogen auf die Gelenkmittelachse 19 gegensinnig in die Lager 12 ein.

Das Halteelement 9 ist bei diesem Ausführungsbeispiel als Tragring 34 ausgestaltet. Der Tragring 34 weist einen Basisring 36 auf, der im Unterschied zu dem Ausführungsbeispiel nach den Figuren 1, 2 und 3 als Vollkreisring ausgestaltet ist und wie zuvor um die Außenseiten 22 der Gelenkgabeln 2 bzw. deren Gabelschenkel 8 geführt ist, wobei dem Tragring 34 ebenfalls zwei Befestigungsbereiche 17 zugeordnet sind. Die Befestigungsbereiche 17 sind wie zuvor beschrieben L-förmig mit dem Zapfenabschnitt 18 und dem an diesem angeordneten Basissteg 24 ausgestaltet. Die Zapfenabschnitte 18 des Tragrings 34 tragen den Zapfen 13 und sind wie die Befestigungsbereiche 17 einander direkt gegenüberliegend angeordnet, so daß die Zapfen 13 mit ihrem freien Ende 21 aufeinander zu orientiert sind. Die Zapfen 13 greifen wie zu Figur 1 beschrieben jeweils gegensinnig in die zugeordneten Lager 12 ein.

Der Zapfenträger 11 ist identisch zu dem Ausführungsbeispiel nach den Figuren 1 und 2 ausgeführt. Das elastische Kupplungselement 7 steht in radialer Richtung etwas über den Basissteg 29 über.

Im Vergleich zu dem Ausführungsbeispiel nach Figur 1 ist das Halteelement 9 bzw. der Tragring 34 nach Figur 4 im Längsschnitt bzw. in der Seitensicht gesehen mit seiner Mittelachse X axial versetzt zur Mittelachse X1 des Zapfenträger 11 angeordnet, wobei das Halteelement 9 bzw. die Ringklammer 14 und der Zapfenträger 11 gemäß dem Ausführungsbeispiel nach Figur 1 mit ihren Mittelachsen X bzw. X1 kongruent sind. Durch eine kongruente Anordnung der Mittelachsen X bzw. X1 kann der axiale Bauraumbedarf des Kardangelenks weiter minimiert werden. Selbstverständlich könnte daher auch der Tragring 34 in Figur 4 mit seiner Mittelachse X kongruent zur Mittelachse X1 des Zapfenträgers 11 angeordnet sein, wobei natürlich auch vorgesehen sein kann, daß die Ringklammer 14 in Figur 1 mit ihrer Mittelachse X axial versetzt zur Mittelachse X1 des Zapfenträgers 11 angeordnet ist, wobei die axial versetzte Anordnung den Vorteil des minimierten radialen Bauraums bietet. Die Ausführung als halbkreisförmiges Halteelement 9 wie ausgeführt als Ringklammer 14 in den Figuren 1, 2 und 3 bietet den Vorteil der einfachen radialen Wartung (des Austauschens des Halteelementes 9) ohne Gelenkausbau bzw. dem Trennen des Gelenkes 1 von den Wellen 3 bzw. 4. Dieser Vorteil läßt sich auch bei einer möglichen Ausführung des axial versetzten Tragrings 34 nicht wie in den Figuren 4 und 5 dargestellt als geschlossener Ring, sondern als halbkreisförmiges axial abgesetztes Halteelement 9 nutzen.

Ansonsten entspricht das Ausführungsbeispiel nach den Figuren 4 und 5 dem Ausführungsbeispiel nach den Figuren 1, 2 und 3.

In dem Kardangelenk 1 nach den Ausführungsbeispielen der Figuren 1 bis 5 wird ein Eingangsmoment (Drehrichtung 37) über die angetriebene Welle 3 (Antriebswelle) über die Gelenkgabel 2 auf den in ihr drehbar gelagerten Zapfenträger 11 und von dort auf das elastische Kupplungselement 7 als Zug-/Druckspannung an das drehbar in der Gelenkgabel 2 gelagerte Halteelement 9,14,34 und dann weiter auf die Gelenkgabel 2 der anzutreibenden Welle 4 bzw. Abtriebswelle übertragen. Dies ist mittels des zum Eingangsmoment (Drehrichtung 37) gleichsinnigen Ausgangsmoments (Drehrichtung 38) dargestellt. Selbstverständlich können die Anschlüsse von Eingangs- bzw. Ausgangsmoment 37 bzw. 38 auch vertauscht werden.

Das elastische Kupplungselement 7 ist hinsichtlich der geringfügig erforderlichen Biegesteifigkeit derart gewählt, daß sichergestellt wird, daß eine Drehung des Halteelementes 9, 14, 34 mit dessen Zapfen 13 bzw. des Zapfenträgers 11 bei Neigung (Inklination 39) und Rotation 37, 38 der Gelenkgabeln 2 stattfinden kann, um ein Reibungsmoment gemäß der gewählten Lagerluft in den Lagern 12 zu überwinden. In axialer Richtung erlaubt das elastische Kupplungselement 7 so eine Nachgiebigkeit, die zur Isolation genutzt werden kann, während die Kontur des elastischen Kupplungselementes 7 eine hohe Drehsteifigkeit bereitstellt.

Bei Verwendung einer Ringklammer 14 als Halteelement 9 (wie ausgeführt in den Figuren 1, 2 und 3) muß zudem die Biegesteifigkeit des elastischen Kupplungselementes 7 genügend hoch gewählt werden, um die Ringklammer gemäß der Gelenkeinbaulage abweichend von der Vertikalen zu halten.

Vorteilhafter Weise kann das Kardangelenk 1 bei einer Ausgestaltung nach dem Figuren 1 bis 5 mit einem als Ring ausgestalteten elastischen Kupplungselement 7 kleiner ausgeführt werden, so daß eine axiale Flexibilität bei gleicher Rotationssteifigkeit vergrößert werden kann.

Das in den Figuren 1 bis 5 dargestellte Kardangelenk 1 eignet sich insbesondere zur Verwendung in einer Lenksäule eines Kraftfahrzeuges. Die Wellen 3 bzw. 4 sind zueinander gefluchtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 4 mittels des Inklinationswinkels 39 (Neigung) dargestellt.

## Patentansprüche

1. Kardangelenk, das zwei Gelenkgabeln (2) aufweist, wobei eine der Gelenkgabeln (2) mit einer angetriebenen Welle (3) bzw. Antriebswelle und die andere Gelenkgabel (2) mit einer anzutreibenden Welle (4) bzw. Abtriebswelle verbindbar bzw. verbunden ist, und wobei die beiden Gelenkgabeln (2) um 90° radial verdreht zueinander angeordnet sind, so daß die beiden Gelenkgabeln (2) einen Innenraum (6) bilden, und wobei dem Kardangelenk (1) ein elastisches Kupplungselement (7) zugeordnet ist,
**dadurch gekennzeichnet, daß**
einer der Gelenkgabeln (2) bzw. deren Gabelschenkeln (8) ein diese umgreifendes Halteelement (9, 14, 34) zugeordnet ist, wobei der anderen Gelenkgabel (2) bzw. deren Gabelschenkeln (8) ein einziger Zapfenträger (11) zugeordnet ist, der in dem Innenraum (6) angeordnet ist, und wobei das Halteelement (9,14,34) um eine Außenseite (22) der zugeordneten Gelenkgabel (2) bzw. deren Gabelschenkeln (8) geführt ist, wobei die Halteelemente (9,14,34) L-förmige Befestigungsbereiche (17) mit einem Zapfenabschnitt (18) und einem daran angeordneten Basissteg (24) aufweisen, wobei die Zapfenabschnitte (18) jeweils einen Zapfen (13) tragen, wobei die Zapfen (13) bezogen auf eine Gelenkmittelachse (19) von der Außenseite (22) jeweils gegensinnig in die zugeordneten Gabelschenkel (8) bzw. in darin aufgenommene Lager (12) eingreifen, in denen das Halteelement (9,14,34) drehbar gelagert ist, wobei der Zapfenträger (11) mit seinen L-förmigen Befestigungsbereichen (27) die zugeordneten Gelenkgabeln (2) bzw. die in den zugeordneten Gabelschenkeln (8) angeordneten Lager (12) von dem Innenraum (6) zur Außenseite (22) hin durchdringt, wobei der Zapfenträger (11) in den Lagern (12) drehbar gelagert ist, wobei der einzige Zapfenträger (1) und das Halteelement (9,14,34) räumlich voneinander getrennt sind, und wobei das elastische Kupplungselement (7) zum einen mit den Befestigungsbereichen (17) des Halteelementes (9,14,34) und zum anderen mit den Befestigungsbereichen (27) bzw. deren Basisstegen (29) des einzigen Zapfenträgers (11) verbunden ist.

2. Kardangelenk nach Anspruch 1,
**dadurch gekennzeichnet, daß**
die Zapfen (13) des Halteelementes (9, 14, 34) mit ihrem freien Ende (21) von einer zum Innenraum (6) gegenüberliegenden Außenseite (22) der Gabelschenkel (8) zu dem Innenraum (6) orientiert in die Gabelschenkel (8) bzw. die darin gelagerten Lager (12) eingreifen.

3. Kardangelenk nach Anspruch 1 oder 2,
**dadurch gekennzeichnet, daß**
der Zapfenträger (11) als rotationssymmetrischer Körper ausgestaltet ist

4. Kardangelenk nach einem der vorhergehenden Ansprüche,
**dadurch gekennzeichnet, daß**
der Zapfenträger (11) einen Grundkörper (26) und den sich daran anschließenden, in der Seitenansicht gesehen L-Förmigen Befestigungsbereich (27) mit einem Quersteg (28) und dem daran angeordneten Basissteg (29) aufweist, wobei der Quersteg (28) die Lager (12) von dem Innenraum (6) zu einer dem Innenraum (6) gegenüberliegenden Außenseite (22) der zugeordneten Gelenkgabel (2) bzw. deren Gabelschenkel (8) orientiert durchgreift.

5. Kardangelenk nach einem der Ansprüche 1 bis 4,
**dadurch gekennzeichnet, daß**
das der einen Gelenkgabel (2) zugeordnete Halteelement (9,14) als Ringklammer (14) ausgeführt ist.

6. Kardangelenk nach einem der Ansprüche 1 bis 4,
**dadurch gekennzeichnet, daß**
das der einen Gelenkgabel (2) zugeordnete Halteelement (9,34) als Tragring (34) ausgeführt ist.

## Claims

1. Cardan joint which has two joint forks (2), one of the joint forks (2) being connected or capable of being connected to a driven shaft (3) or drive shaft and the other joint fork (2) being connected or capable of being connected to a drive (4) which is to be driven or output shaft, and the two joint forks (2) being arranged such that they are rotated radially with respect to one another by 90°, with the result that the two joint forks (2) form an inner space (6), and the cardan joint (1) being assigned an elastic coupling element (7), **characterized in that** one of the joint forks (2) or its fork limbs (8) is/are assigned a holding element (9, 14, 34) which engages around the former, the other joint fork (2) or its fork limbs (8) being assigned a single journal carrier (11) which is arranged in the inner space (6), the holding element (9, 14, 34) being guided around an outer side (22) of the assigned joint fork (2) or its fork limbs (8), the holding elements (9, 14, 34) having L-shaped fastening regions (17) with a journal section (18) and a base web (24) which is arranged on the former, the journal sections (18) in each case carrying a journal (13), the journals (13) engaging into the associated fork limbs (8) or into bearings (12) which are accommodated in the latter and in which the holding element (9, 14, 34) is mounted rotatably, in each case in opposite directions from the outer side (22) in relation to a joint centre axis (19), the journal carrier (11) penetrating, with its L-shaped fastening regions (27) and from the inner space (6) towards the outer side (22), the associated joint forks (2) or the bearings (12) which are arranged in the associated fork limbs (8), the journal carrier (11) being mounted rotatably in the bearings (12), the single journal carrier (1) and the holding element (9, 14, 34) being separated spatially from one another, and the elastic coupling element (7) being connected firstly to the fastening regions (17) of the holding element (9, 14, 34) and secondly to the fastening regions (27) or their base webs (29) of the single journal carrier (11).

2. Cardan joint according to Claim 1, **characterized in that** the journals (13) of the holding element (9, 14, 34) engage with their free end (21) into the fork limbs (8) or the bearings (12) which are mounted in them, in a manner which is oriented from an outer side (22) of the fork limbs (8) which lies opposite the inner space (6) towards the inner space (6).

3. Cardan joint according to Claim 1 or 2, **characterized in that** the journal carrier (11) is configured as a rotationally symmetrical body.

4. Cardan joint according to one of the preceding claims, **characterized in that** the journal carrier (11) has a basic body (26) and the fastening region (27) which adjoins the former, is L-shaped as viewed from the side and has a transverse web (28) and the base web (29) which is arranged on the latter, the transverse web (28) engaging through the bearings (12) in a manner which is oriented from the inner space (6) to an outer side (22), which lies opposite the inner space (6), of the associated joint fork (2) or its fork limbs (8).

5. Cardan joint according to one of Claims 1 to 4, **characterized in that** the holding element (9, 14) which is assigned to one joint fork (2) is configured as an annular clip (14).

6. Cardan joint according to one of Claims 1 to 4, **characterized in that** the holding element (9, 34) which is assigned to one joint fork (2) is configured as a bearing ring (34).

## Revendications

1. Joint à croisillon, présentant deux fourchettes de joint (2), l'une des fourchettes de joint (2) pouvant être connectée ou étant connectée à un arbre entraîné (3) ou un arbre d'entraînement et l'autre fourchette de joint (2) pouvant être connectée ou étant connectée à un arbre à entraîner (4) ou un arbre de sortie, et les deux fourchettes de joint (2) étant disposées de manière tournée radialement de 90° l'une par rapport à l'autre, de sorte que les deux fourchettes de joint (2) forment un espace interne (6) et un élément d'accouplement élastique (7) étant associé au joint à croisillon (1),
**caractérisé en ce qu'**
un élément de fixation (9, 14, 34) venant en prise autour d'une des fourchettes de joint (2) ou de leurs branches de fourchette (8) est associé à celles-ci, un support de tourillon (11) unique étant associé à l'autre fourchette de joint (2) ou ses branches de fourchette (8) et étant disposé dans l'espace interne (6), l'élément de fixation (9, 14, 34) étant guidé autour d'un côté extérieur (22) de la fourchette de joint (2) associée ou de ses branches de fourchette (8), les éléments de fixation (9, 14, 34) présentant des régions de fixation en forme de L (17) avec une portion de tourillon (18) et une nervure de base (24) disposée dessus, les portions de tourillon (18) portant à chaque fois un tourillon (13), les tourillons (13) venant en prise, par rapport à un axe médian d'articulation (19) depuis le côté extérieur (22) à chaque fois en sens inverse, dans les branches de fourchette (8) associées ou dans des paliers (12) reçus dans celles-ci, dans lesquels l'élément de fixation (9, 14, 34) est monté à rotation, le support de tourillon (11), avec ses régions de fixation en forme de L (27), traversant les fourchette de joint (2) associées ou les paliers (12) disposés dans les branches de fourchette (8) associées, depuis l'espace interne (6) jusqu'au côté extérieur (22), le support de tourillon (11) étant monté à rotation dans les paliers (12), le support de tourillon unique (1) et l'élément de fixation (9, 14, 34) étant séparés spatialement l'un de l'autre, et l'élément d'accouplement élastique (7) étant connecté d'une part aux régions de fixation (17) de l'élément de fixation (9, 14, 34) et d'autre part aux régions de fixation (17), ou à leurs nervures de base (29), du support de tourillon unique (11).

2. Joint à croisillon selon la revendication 1,
**caractérisé en ce que**
les tourillons (13) de l'élément de fixation (9, 14, 34) viennent en prise avec leur extrémité libre (21) depuis un côté extérieur (22) des branches de fourchette (8) opposé à l'espace interne (6) vers l'espace interne (6), dans les branches de fourchette (8) ou les paliers (12) montés dedans.

3. Joint à croisillon selon la revendication 1 ou 2,
**caractérisé en ce que**
le support de tourillon (11) est configuré sous forme de corps à symétrie de révolution.

4. Joint à croisillon selon l'une quelconque des revendications précédentes,
**caractérisé en ce que**
le support de tourillon (11) présente un corps de base (26) et la région de fixation (27) s'y raccordant, en forme de L en vue de côté, avec une nervure transversale (28) et la nervure de base (20) disposée dessus, la nervure transversale (28) venant en prise à travers les paliers (12) depuis l'espace interne (6) vers un côté extérieur (22) de la fourchette de joint (2) associée ou de ses branches de fourchette (8), opposé à l'espace interne (6).

5. Joint à croisillon selon l'une quelconque des revendications 1 à 4,
**caractérisé en ce que**
l'élément de fixation (9, 14) associé à l'une des fourchettes de joint (2) est réalisé sous forme de pince annulaire (14).

6. Joint à croisillon selon l'une quelconque des revendications 1 à 4,
**caractérisé en ce que**
l'élément de fixation (9, 14) associé à l'une des fourchettes de joint (2) est réalisé sous forme de bague de support (34).
